Europäisches Patentamt

(19) European Patent Office

Office européen des brevets

(11) Publication number: **0 037 053**
**A1**

(12) **EUROPEAN PATENT APPLICATION**

(21) Application number: **81102188.0**

(22) Date of filing: **24.03.81**

(51) Int. Cl.³: **H 01 M 4/50**
**H 01 M 6/16**

(30) Priority: **27.03.80 JP 39727/80**

(43) Date of publication of application:
**07.10.81 Bulletin 81/40**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Eda, Nobuo**
**6-101, 5, Fujisakanishimachi**
**Hirakata-shi Osaka-fu(JP)**

(72) Inventor: **Morita, Akiyoshi**
**8-16, Hagoromo 5-chome**
**Takaishi-shi Osaka-fu(JP)**

(72) Inventor: **Iijima, Takashi**
**35-26, Yamanouenishimachi**
**Hirakata-shi Osaka-fu(JP)**

(72) Inventor: **Ogawa, Hiromichi**
**16-6, Ikuno 4-chome**
**Katano-shi Osaka-fu(JP)**

(74) Representative: **Eisenführ & Speiser**
**Martinistrasse 24**
**D-2800 Bremen 1(DE)**

(54) **Method of producing active cathode material for non-aqueous cells.**

(57) A method of producing manganese dioxide, which is used for an active cathode material for non-aqueous cells such as manganese oxide-lithium cells or the like. Moisture-containing manganese dioxide is dehydrated by dielectric heating through intermittent microwave irradiation, with the atmosphere during the dielectric heating being arranged to be under reduced pressures or in inert gas atmosphere, and thus, manganese dioxide which provides cells superior in discharge characteristics and storage property has been presented.

*Fig. 2*

discharge time (hr)

## METHOD OF PRODUCING ACTIVE CATHODE
## MATERIAL FOR NON-AQUEOUS CELLS

The present invention relates to a method of producing manganese dioxide to be used as an active cathode material for a non-aqueous cell employing organic electrolyte, with a light metal such as lithium and the like adopted as an active anode material. More particularly, in the method according to the present invention, moisture-containing manganese dioxide is dehydrated by dielectric heating through intermittent microwave irradiation so as to raise discharge voltage and to improve discharge utilization rate for providing an active cathode material which is superior even in long-term storage property.

Conventionally, as manganese dioxide which is used in this type of cells, it has been essential to dehydrate sufficiently the manganese dioxide to ensure stable storage property. For this purpose, heating treatments at temperatures higher than 300°C, and in most cases, at 300° through 400°C are carried out. But, with respect to the discharging characteristics, the so-called moisture-containing manganese dioxide which is not heated or which is heated at temperatures lower than 200°C, even if such heating is effected, is considered to be superior. However, heat treatments at temperatures higher than 300°C are not desirable, since transformation takes place from γ phase to β phase in which the discharging activity is deteriorated. Namely, in the heat treatments below 300°C, the discharge characteristics are superior, but the storage property is inferior, while in the heat treatments above 300°C, the storage property is inferior but the discharge characteristics are inferior.

Recently, for overcoming the above disadvantages a dielectric heating method by microwave irradiation has been investigated. It is considered that this method allows manganese dioxide to be dehydrated without any variation in the basic crystalline structure in the $\gamma$ phase. However, it has been found after detailed examinations, that depending on the conditions for the microwave irradiation partial formation or mixing of a large amount of $\beta$-$MnO_2$ and further formation and mixing of $\alpha$-$Mn_2O_3$ or the like which hardly function as a cell active substance, are noticed, resulting in lowering of the discharge voltage, reduction of utilization rate, etc.

More specifically, the heating through the microwave irradiation produces a local high temperature, since the adsorbed water or crystallization water in $MnO_2$ is directly vibrated to generate the heat, and it has been found that such a local high temperature forms $\beta$-$MnO_2$ or $\alpha$-$Mn_2O_3$. In the microwave irradiation at low output which may not permit formation of $\beta$-$MnO_2$ or $\alpha$-$Mn_2O_3$, the dehydration of $MnO_2$ is insufficient, thus resulting in unstable storage property.

Upon examination of such various phenomena as described hereinabove, the present inventors have found that the microwave irradiation of relatively large output in the form of pulses for a short time to promote the dehydration, with subsequent interruption for a relatively long period, is effective to prevent the local heating. Also, the dehydrating effect is further improved, if the dielectric heating is effected under a reduced pressure or under an inert gas atmosphere.

Accordingly, an essential object of the present invention is to provide an improved method of producing an active cathode material for non-aqueous cells which is superior in discharge characteristics and storage property.

Another important object of the present invention is to provide a method of producing an active cathode material of the above described type in which it is intended to improve the dielectric heating performance through microwave irradiation which is superior in principle.

In accomplishing these and other objects, according to one preferred embodiment of the present invention, there is provided a method of producing active cathode materials for non-aqueous cells comprising the steps of subjecting moisture-containing manganese dioxide to intermittent microwave irradiation, and dehydrating said moisture-containing manganese dioxide through dielectric heating by the microwave irradiation.

By the process according to the present invention as described above, manganese dioxide for cells having superior discharge characteristics and storage properties has been advantageously presented, with substantial eliminations of disadvantages inherent in the conventional methods of this kind.

These objects, features, aspects and advantages of the present invention will become more apparent from the following detailed description of the present invention when taken in conjunction with the accompanying drawings.

Fig. 1 is a cross-sectional view of a cell to which the method of the present invention may be applied, and

Figs. 2 through 4 are graphs showing comparisons in discharging characteristics among cells employing manganese dioxides treated in various ways.

Hereinbelow, EXAMPLES are inserted for the purpose of illustrating the present invention, without any intention of limiting the scope thereof.

EXAMPLE 1

As manganese dioxide for a raw material, electrolytic manganese dioxide obtained through acid path of manganese salt in a known manner and sufficiently washed with water, was employed. The electrolytic manganese dioxide thus prepared was chiefly in $\gamma$ phase, and of course, contained moisture, with the moisture content of approximately 10% by weight. The manganese dioxide as described above was subjected to dehydrations by a pulse-form dielectric heating methods (A) and (B) of the present invention, and by the continuous dielectric heating methods (C) and (D), and also a conventional external heating method (E) for comparison. The heating in each of the methods (A) through (E) was effected in the atmosphere of air.

(A) 100 g of the above described electrolytic manganese dioxide was uniformly placed on a heat-resistant hard glass vessel of 15 cm in inner diameter and was dehydrated by an electronic oven (2.45 GHz). The output of the electronic oven was 500 W. A cycle of 5 seconds' on and 20 seconds' off was repeated for about 25 minutes. At this time, the temperature of the manganese dioxide was below 300°C.

(B) In the same manner, three cycles were repeated, each cycle including a process of continuing for 5 minutes, through 5 seconds' on and 10 seconds' off, with subsequent interruption of 25 minutes. At this time, the manganese dioxide was below 250°C in temperature.

(C) In the similar manner, heating was continuously effected for 5 minutes, with the output of the microwave oven set to be 500W. The temperature of the manganese dioxide at this time was below 300°C.

(D) Similarly, heating was continuously effected for 10 minutes with the output of the electronic oven lowered to 250W. The temperature of the manganese dioxide was below 250°C in the above case.

(E) The same manganese dioxide was heated, by an electric furnace, at 300°C for one hour to effect the dehydration.

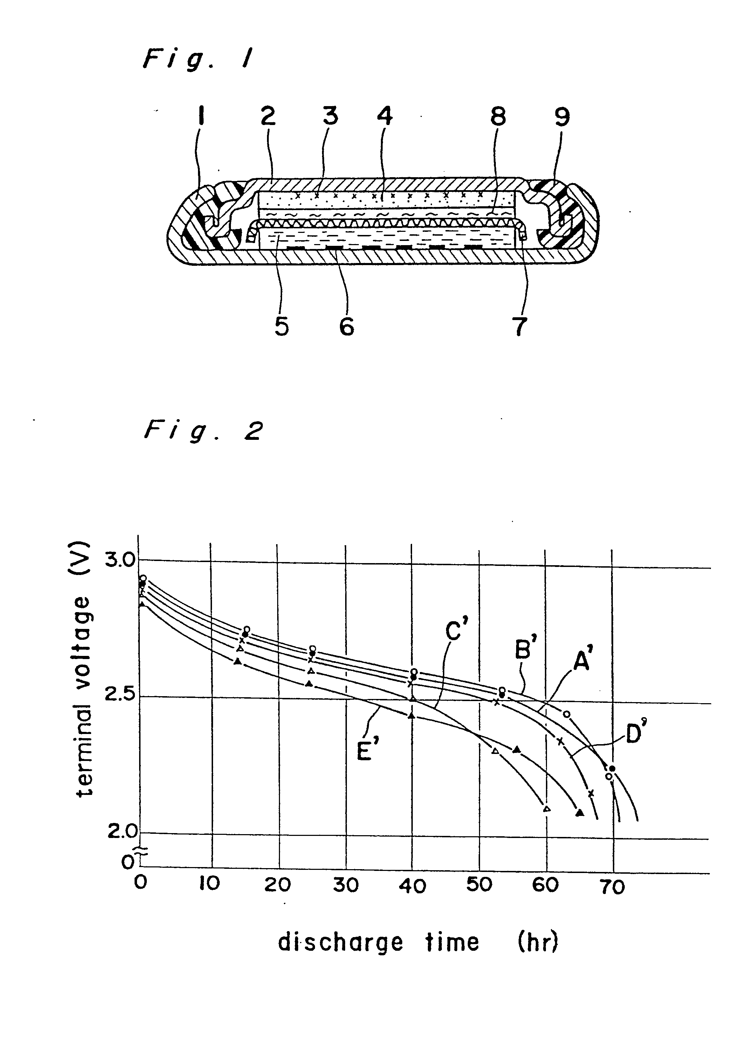

3 parts by weight of acetylene black and 5 parts by weight of fluorine resin bonding agent were mixed with 100 weight parts of the manganese dioxide dehydrated in the above described manner to form the cathode compound, and a flat cell 23 mm in diameter and 2.5 mm in height as shown in Fig. 1 was prepared thereby for comparison of the characteristics of the cells.

Referring to Fig. 1, there is shown a flat type manganese dioxide cell to which the present invention may be applied, which generally includes a casing 1 of stainless steel, a sealing plate 2 of the same material, a grid 3 spot-welded to the inner surface of the sealing plate 2 to which grid 3, an anode of disc-like lithium plate 4 is attached under pressure, a cathode 5 formed by molding the anode compound as described earlier into a disc-shape, current collectors 6 made of titanium and spot-welded to the inner surface of the casing 1, separators 7 and 8 made of non-woven fabric of polypropylene, and a gasket 9 of polypropylene. There was employed an electrolyte wherein lithium perchlorate was dissolved, at a concentration of 1 mol/ℓ, into a mixed solvent of propylene carbonate and 1,2-dimethoxyethane in equal volume. 200 μℓ of electrolyte was poured into the cell, which was thereafter sealed. It is to be noted here that the cathode was 0.7 g and the anode lithium was 0.07 g in weight.

Fig. 2 shows the discharge characteristics of the corresponding cells A' to E' using the manganese dioxide through each of the treating methods of the above-described items (A) through (E) and gives discharge curves under 1 KΩ load at 20°C immediately after the manufacture.

Table 1 below shows the storage property as represented by the characteristics after 30 days' preservation at 60°C.

Table 1

| Cells | Open-Circuit Voltage (V) | | Internal Resistance (Ω) of Cell | |
|---|---|---|---|---|
| | Immediately After Trial Manufacture | After Preservation | Immediately After Trial Manufacture | After Preservation |
| A' | 3.68 | 3.65 | 12 | 15 |
| B' | 3.70 | 3.66 | 12 | 15 |
| C' | 3.63 | 3.60 | 13 | 20 |
| D' | 3.70 | 3.53 | 12 | 51 |
| E' | 3.60 | 3.45 | 16 | 39 |

It can be said from the above-described results that the A', B' and D' are superior in characteristics from Fig. 2. This is because the intermittent pulse irradiation by microwaves or the continuous irradiation at low output are effective. However, according to the above-described Table 1, D' is particularly larger in the internal resistance of the cell in terms of the deterioration of the preservation characteristics. $MnO_2$ of β phase or $Mn_2O_3$ of α phase are prevented from being formed in the treating method of D, but the moisture contained is not sufficiently removed. Thus, it is considered that the preservation characteristics are adversely affected. Accordingly, it is found that the manganese dioxide obtained through the methods A and B of the present invention is superior in discharging performance and storage property. Also, the conditions for intermittent microwave irradiation are different respectively according to the treating amounts or the like of $MnO_2$, and may be decided based on the dehydrating operation of $MnO_2$ containing moisture by the momentary heating through microwaves and overheat prevention of $MnO_2$ itself by interruption of subsequent irradiation as fundamental requirements.

The atmosphere in the dielectric heating of manganese dioxide will be described hereinafter. Conventionally, the atmosphere in the dielectric heating of the manganese dioxide has been normally of air (atmospheric pressure), since the moisture removed during the dielectric heating adheres onto the surface of manganese dioxide to be heated, and the dehydration is insufficient as an active material for non-aqueous cells, thus often causing slightly inferior storage property. For further improving the storage property to achieve a marked improvements in the discharging characteristics after the storage, it is preferable to perform the dielectric heating under reduced pressures by intermittent microwave irradiation. According to this method, the dehydrating operation can be more effectively performed and the dehydration almost complete in γ phase as it is, can be effected, which has been impossible to be achieved even under reduced pressures by the conventional external heating methods. In the treatment under such reduced pressures as described hereinabove, the temperature of the manganese dioxide does not rise higher than necessary, since the moisture attached onto the surface is removed to facilitate the inner dehydration and the moisture as a dielectric heating medium can be removed. Accordingly, the active γ phase allows complete dehydration, thus resulting in the improvements of storage property and discharging performance.

EXAMPLE 2

As manganese dioxide for a raw material, electrolytic manganese dioxide obtained through manganese sulfate bath by the ordinary method was employed. The above electrolytic manganese dioxide is chiefly in γ phase, but contains moisture, with the moisture content being approximately 10% by weight.

(I) 50 g of the above-described manganese dioxide was uniformly placed on a vessel (whose inner diameter is 15 cm) of heat-resistant glass, and was put in a heat-resistant glass sealed container, which had an exhaust port and an exhaust pipe, and was then disposed in an electronic oven (2.45 GHz) for cooking use. The temperature was measured by a thermo-couple while the interior of the container is being kept under a reduced pressure of 1 mmHg, and the output of the microwave was controlled to effect the dehydration through the dielectric heating. According to the irradiating method of the microwaves at this time, three cycles were repeated, each cycle including a process continuing for 5 minutes, through 10 seconds' on and 15 seconds' off, with subsequent interruption of 25 minutes.

(II) The microwave irradiation was directed to the manganese dioxide, continuously for 6 minutes which was equal in the substantial irradiation time to the above-described time, under the same conditions with the same material and apparatus for comparison.

(III) The microwave irradiation was directed onto the manganese dioxide, under the same intermittent conditions as those in (A) of EXAMPLE 1, in the air with the use of the same material and electronic oven for comparison.

In each of the treating methods (I) through (III), investigations were made under two conditions with the highest temperatures in the treatment of the specimen set at 200°C and 400°C. Since the temperature for the manganese dioxide to be transferred from γ phase to β phase in air was conventionally considered to be in the vicinity of 250°C, 200°C was selected as the representative example of 100° through 250°C, and 400°C was selected as the representative example of 250° through 450°C. The characteristics thereof are shown in Table 2.

For comparison of the respective specimens with respect to the cell characteristics, cells were prepared by the same materials and under the same composition and construction as those of EXAMPLE 1. One difference therebetween is that the electrolyte amount within the cell was made to 180 μℓ.

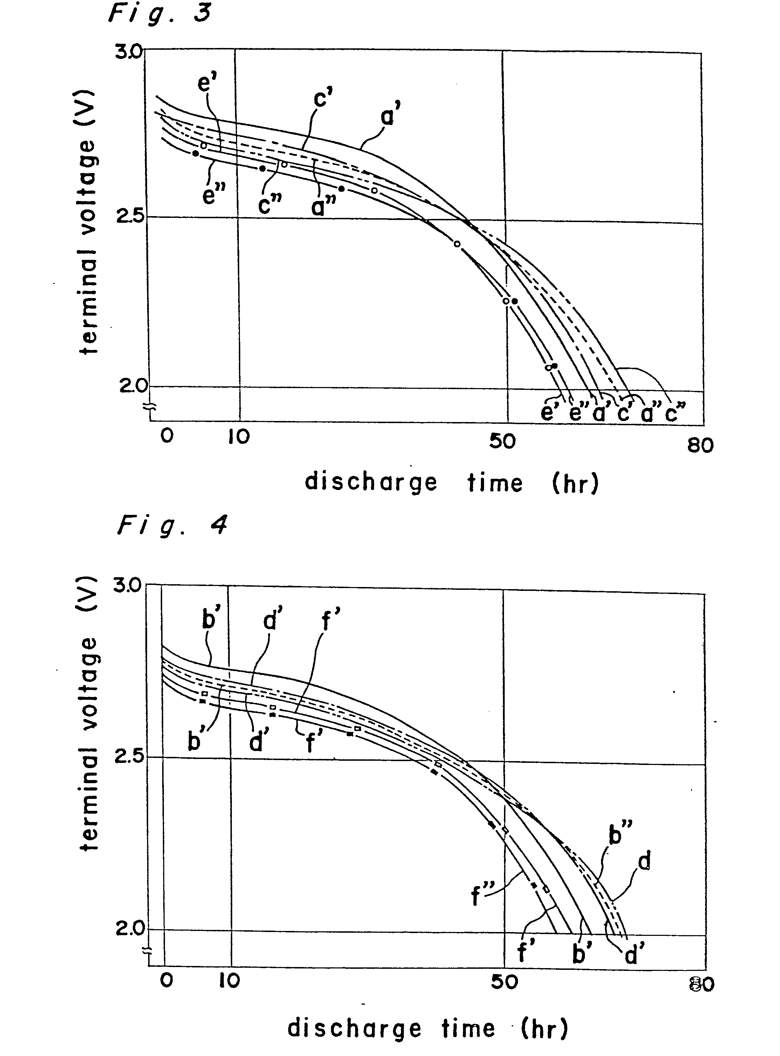

Fig. 3 shows cells a', c' and e', immediately after manufacture, respectively using the specimens a, c, e treated at a temperature of 200°C and cells a", c" and e", after thirty days' preservation at 60°C, in terms of discharge characteristics of 20°C and 800 Ω load.

Table 2

| | Dehydrating Methods | Highest Temperatures For Treatment (°C) | Moisture Contents (wt%) | Phases | Specimen Symbols |
|---|---|---|---|---|---|
| I | Inventive Method | 200 | 0.005 | γ | a |
| | Intermittent Irradiation Under Reduced | 400 | 0.005 | γ (slightly β) | b |
| II | Continuous Irradiation Under Reduced Pressures | 200 | 0.006 | γ | c |
| | | 400 | 0.005 | γ (slightly β) | d |
| III | Intermittent Irradiation In Air | 200 | 0.010 | γ | e |
| | | 400 | 0.008 | γ (partially β) | f |

Fig. 4 shows cells b', d' and f', immediately after manufacture, respectively using the specimens b, d, f of 400°C in treatment temperature, and cells b", d" and f", after thirty days' preservation at 60°C, in terms of discharge characteristics of 20°C and 800 Ω load.

Meanwhile, Table 3 shows the storage property in the characteristics after 30 days' preservation at 60°C.

Table 3

| Specimen Symbols | Open-Circuit Voltage (V) | | Internal Resistance (Ω) of cell | |
|---|---|---|---|---|
| | Immediately After Trial Manufacture | After Preservation | Immediately After Trial Manufacture | After Preservation |
| a | 3.71 | 3.67 | 10 | 13 |
| b | 3.69 | 3.66 | 11 | 14 |
| c | 3.68 | 3.65 | 13 | 17 |
| d | 3.66 | 3.62 | 15 | 19 |
| e | 3.66 | 3.61 | 18 | 21 |
| f | 3.64 | 3.60 | 20 | 23 |

As apparent from Fig. 3, Fig. 4 and Table 3, the cells of the present invention using manganese dioxide dehydrated through the intermittent heating under the reduced pressures are superior in electric characteristics, preservation property and discharge characteristics, to the cells using manganese dioxide thermally treated through the continuous dielectric heating under the reduced pressures or cells using manganese dioxide thermally treated through the intermittent dielectric heating in the air. It is also seen from Fig. 3 and Fig. 4 that the discharge characteristics thereof are superior even after preservation at high temperatures.

The specimen treated at 200°C of the treatment temperatures 200°C and 400°C is higher in open-circuit voltage and lower in internal resistance of cell in electric characteristics, i.e., is superior to 400°C. This tendency remains unchanged even after 30 days' preservation at 60°C. In the discharge characteristics, the specimen treated at 200°C has the discharge voltage somewhat high immediately after the trial manufacture and even after the preservation.

It is apparent from the above description that the manganese dioxide thermally treated through the intermittent dielectric heating under the reduced pressures is superior in performance to the manganese dioxide treated through the intermittent dielectric heating in the air, and is superior in electric characteristics, discharge characteristics and storage property to the manganese dioxide treated through the continuous dielectric heating operation under the reduced pressures.

Normally, the treatment at 200°C is somewhat superior to the treatment at 400°C. It is apparent from Fig. 3, Fig. 4 and Table 3 that the intermittent dielectric heating operation (400°C) under the reduced pressures in accordance with the present invention is somewhat superior to the continuous dielectric heating operation (200°C) under the reduced pressures, and thus, advantage of the intermittent dielectric heating under the reduced pressures is noticed.

In EXAMPLES 1 and 2, although the manganese dioxide of γ phase was used, upon consideration that one object of the present invention is to effect the dielectric heating through microwave irradiation by giving energy enough to remove contained moisture, without destroying the crystalline structure of the specimen, and that the γ phase of the manganese dioxide is the largest in electro-chemical activity, not only the electrolytic manganese dioxide, but also the natural manganese dioxide of γ phase or manganese dioxide of γ phase produced by known chemical synthesis may be used.

In EXAMPLES, for raw material, the manganese dioxide obtained through acid bath of manganese salt and sufficiently washed with water, was employed. But depending on necessity, electrolytically analyzed manganese dioxide may be used as it is without being washed with water. Also, the atmosphere for the dielectric heating of the manganese dioxide was of air or under reduced pressures in the foregoing description. However, it is more preferable that the atmosphere is under inactive atmosphere, for example, of nitrogen, argon, helium or the like, since the active moisture molecules and oxygen in air which are generated in the dielectric heating prevent high class oxides or hydroxides from being produced on the surface of the manganese dioxide.

In EXAMPLES of the present invention, the lithium was used for the anode, but it may be replaced by light metal such as sodium or the like. Meanwhile, although a mixture solvent of propylene carbonate and 1,2-dimethoxyethane was used for electrolyte in the foregoing EXAMPLES, γ-butyrolactone may be used for propylene carbonate. Similarly, a mixed solvent selected from a group composed of 1,3-dioxolane, tetrahydrofuran or the like may be used for 1,2-dimethoxyethane. As the electrolyte, an organic electrolyte for use in this type of cell with the manganese dioxide as an active cathode material can be applied.

In the foregoing EXAMPLES 1 and 2, the frequency at 2.45 GHz (2,450 MHz) was used for the microwave oven, but a frequency at 915 MHz which is larger in penetration degree may be used.

As described hereinabove, the present invention can provide a manganese dioxide active cathode material, which ensures cells superior in discharge characteristics and storage property.

Although the present invention has been described and illustrated in detail, it is to be clearly understood that the same is by way of illustration and example only and is not to be taken by way of limitation, the spirit and scope of the present invention being limited only by the terms of the appended claims.

What is claimed is:

1.          A method of producing active cathode materials for non-aqueous cells comprising the steps of subjecting moisture-containing manganese dioxide to intermittent microwave irradiation, and dehydrating said moisture-containing manganese dioxide through dielectric heating by the microwave irradiation.

2.          A method of producing active cathode materials for non-aqueous cells in accordance with Claim 1, wherein the moisture-containing manganese dioxide is at least one selected from the group consisting of electrolytic manganese dioxide, natural manganese dioxide and chemical synthetic manganese dioxide mainly in γ phase.

3.          A method of producing active cathode materials for non-aqueous cells in accordance with Claim 1, wherein said dielectric heating by the microwave irradiation is of intermittent nature with a relatively long interruption being provided between on and off irradiations in the form of pulses.

4.          A method of producing active cathode materials for non-aqueous cells in accordance with Claim 1, wherein the temperature for the dielectric heating is below 400°C.

5.          A method of producing active cathode materials for non-aqueous cells in accordance with Claim 1, wherein treating atmosphere is of at least one of the treatments in air, in inert gas and under reduced pressures.

Fig. 1

Fig. 2

terminal voltage (V)

discharge time (hr)

Fig. 3

Fig. 4

**European Patent Office**

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | US − A − 2 613 877 (HUNRATH)<br>+ Column 1, lines 41−50 +<br>−−<br>US − A − 3 918 988 (ABENS)<br>+ Example 1 +<br>−−−− | 1<br><br><br>1 | H 01 M 4/50<br>H 01 M 6/16 |

**TECHNICAL FIELDS SEARCHED (Int. Cl.³)**

H 01 M 4/00

H 01 M 6/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X   The present search report has been drawn up for all claims

| Place of search | Date of completion of the search | Examiner |
|---|---|---|
| VIENNA | 15-06-1981 | LUX |

EPO Form 1503.1   06.78